Europäisches Patentamt

European Patent Office

Office européen des brevets

(11) Publication number: **0 065 377**
**A1**

## (12) EUROPEAN PATENT APPLICATION

(21) Application number: **82302256.1**

(51) Int. Cl.³: **H 04 L 11/16, H 04 L 7/00**

(22) Date of filing: **30.04.82**

(30) Priority: **11.05.81 US 262012**

(43) Date of publication of application: **24.11.82**
**Bulletin 82/47**

(84) Designated Contracting States: **DE FR GB**

(71) Applicant: **ELTRA CORPORATION, 511 Hamilton Street, Toledo, OH 43694 (US)**

(72) Inventor: **Stollberger, Chris, 48 Hallock Avenue, Smithtown, N. Y. (US)**

(74) Representative: **Bryant, Frank, Linotype & Machinery Limited Norman Road, Altrincham Cheshire WA 14 4ES (GB)**

(54) An apparatus for conforming the length of a data stream to a transmission line.

(57) This is a system to control the length of a data stream within a transmission which varies in electrical length. A store is connected to the transmission line. Data is placed in the store when the line contracts and data is placed on the line when the line expands. During initial loading, data is timed to enter the store after the transmission line is filled with data. Data is clocked into the store responsive to the data phase at the store.

# AN APPARATUS FOR CONFORMING THE LENGTH OF A DATA STREAM TO A TRANSMISSION LINE

## FIELD OF THE INVENTION

This invention relates to the field of data transmission and particularly to a data bus where data is recirculated and transmitted from peripherals connected in the bus.

## BACKGROUND OF THE PRIOR ART

Transmission loops providing a data bus connecting several peripheral units are well known in the art. One such loop transmission scheme is shown in U.S. patent 4,064,486, where data in the form of electrical signals are circulated.

Any suitable data format may be used within such transmission system, one example being Manchester coding. Regardless of the data format chosen, the data structure must be acurately repeated so that the proper synchronization and interpretation of the data can be accomplished by the peripherals in the loop.

In transmission systems, and especially loop transmission systems as shown in the above patent, data of a particular length is placed within a transmission system and this data is recirculated. In many cases, a data stream is placed in the transmission system. As the data stream consists of data pulses traveling within the transmission system at a known propagation rate, the system length will occupy a finite distance or physical length and its length also may be defined by the time for that data stream to pass a single point in the transmission system.  In many cases, this length
is longer than the electrical length of the transmission
system and a portion of the data must be accommodated
outside of a physical transmission line.

Additionally, as peripherals are added or taken
from the line the transmission system will contract or
expand.  Contraction or expansion may also result from
changes in temperature and from other effects which
change the phase of the data signal at a data line
output or input port.

## SUMMARY OF THE INVENTION

A data transmission system is provided in the
form of a recirculating loop.  Data is transmitted
around the loop in a predetermined format.  Peripheral
devices are connected in the transmission system and
either transmit into the system for receipt by another
peripheral or can receive information sent through the
system by the peripheral.

The transmission system must be capable of accommodating a data stream of a definite length and must
be capable of maintaining the data stream in synchronism
with a reference so the data may be properly interpreted.
A recirculating system should have a means for periodically verifying the data synchronization.  By synchronization the identity of each data bit location in the
data stream can be ascertained and the data appearing
in those locations then may be given their proper interpretation.

Further, in a data transmission system gaps should
be limited and ideally there should be an absence of
gaps between the end of one data bit such as at the end
of the data stream and the next following bit such as
at the beginning of the recirculated data stream.  This
requires that the data be placed on the line with the
first data bit of the recirculated data stream immediately following in that location vacated by the last bit of the data stream.

In a typical installation, portions of the data transmission system will include a line or cable with a varying electrical length. The electrical length may vary due to temperature or some other extraneous influence or may change due to the addition or removal of peripherals in the transmission system. When the line changes electrical length, then the length of data that can be accommodated by the line changes accordingly. The phase of the data appearing at the end of the line when the line contracts will appear advanced in phase while the data appearing at the end of the line when the line expands will appear retarded in phase.

Where the length of the data stream is longer than the data line, a supplemental means must be provided for accommodating the excess data and for causing that data to be reinserted into the line in synchronism with the data stream on the line and moving through the system.

Where the system is shown to be out of synchronism an apparatus and method is provided to reintroduce synchronism to the system and if necessary by clearing all data from the line and resynchronizing the data in the line.

The principles of the invention disclosed are shown through a system designed to control the length of the data stream within a transmission line which may vary in electrical length. A data stream of finite length is loaded onto the transmission system and onto a line within the transmission system. The data locations in the data stream are synchronized relative to the timed location of a selected data byte. A store is provided in the system which is connected to receive the data from the line at its input and is reconnected to reinsert data back into the line at its output.

In the initial loading of the data, the data stream will reach a length that will be equal to the electrical length of the line. Additional data placed onto the line will then cause the initial data to be inserted into the store. As the last data bit is placed onto the line, the first data bit of the data stream will be extracted from the store and reinserted onto the line to occupy the line data location vacated by the last entered bit of the data stream. The data is reinserted from the store on the line at a clock rate related to the rate the data is loaded onto the line. Data is taken off the line and inserted into the store at the received data rate, which is the same frequency as the clock rate, but varying in phase depending upon the electrical length of the line and the phase of the data at the input to the store.

Accordingly, the data rate on the line is monitored and responsive to a predetermined data phase appearing at the end of the line and at the input port of the store means, the data state is decoded and placed in the store. The store comprises a first-in-first-out buffer. The data first in will appear first at the store output for reinsertion into the line. A suitable encoder, re-encodes data state at the clock rate so the timing of the data on the line remains unchanged.

While the phase of the data at the input to the buffer may vary, compared to the phase of the data at the output, the data frequency will never vary as each data bit must be moving through the system in the same time relation to all of the data bits.

According to further principles of this invention, each data location in the data stream must be synchronized to a reference location in the data stream. That reference may be a reference data location or a clock time or a physical location in the data transmission system for a predetermined clock time. The predetermined clock time may in turn be related to the length of the data stream and the time for the complete data stream to recirculate past a given point in the data transmission system.

In the preferred embodiment, a synchronization code is observed as it recirculates about the system. That synchronization code must appear at a selected point in the transmission system at a selected time to verify the synchronization. The predetermined time may also be referred to as the time length of the transmission system and understood as the time for the length of the data stream to circulate past a given location in the data transmission system.

In the preferred embodiment, the location chosen is at the output of the store means. Where a selected data byte used for synchronization appears at the synchronization time, then the data is allowed to continue to circulate. Where nonselected data appears at the synchronization time, then an error indication of nonsynchronization error is produced. As it is most likely that the synchronization code has been distorted due to its transmission through the system, the correct synchronization code is reinserted in the proper location in the data stream and the data stream is allowed to recirculate. If a predetermined number of synchronization errors reappear, such as 8 for example, then it is assumed that the error is due to a cause other than transmission error and all data is cleared from the system and the data is reloaded.

According to the principles of the invention, a means is shown for properly loading data of a finite length into a circulating transmission system so that the data occupies the whole length of the transmission system. Additionally shown is a store means for absorbing or adding data back onto an electrical line which may vary in electrical length and providing a buffer to absorb a data stream length in excess of a line length. Additionally shown is synchronization verification means and means for resynchronizing the transmission system.

<div align="center">BRIEF DESCRIPTION OF THE DRAWINGS</div>

Fig. 1 shows a data transmission system in general form including a transmission line containing intraline units and a separate store.

Fig. 2 shows Manchester encoded data as may be used as for example in the preferred embodiment.

Fig. 3 shows a representation of data on the transmission line and the effect of a change in the line electrical length on the phase of the data at the end of the line.

Fig. 4 shows a data stream in block form.

Fig. 5 shows the system in block form.

Fig. 6 shows in detail the means for decoding the rate data is received at the store and the means transferring data at the received data rate into the store.

Fig. 7 is a time diagram for the circuit of Fig. 6.

Fig. 8 is the system for verifying the synchronization of the data stream.

Fig. 9 is a data word such as the presynch code used in the preferred embodiment to verify the synchronization of the data stream.

<div align="center">DESCRIPTION OF THE PREFERRED EMBODIMENT</div>

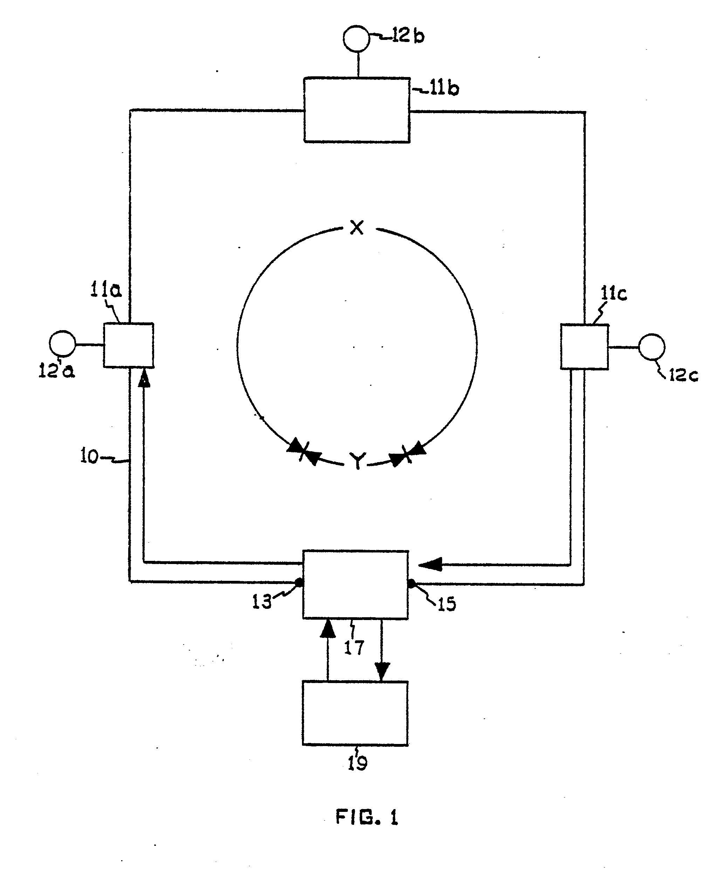

Referring to Fig. 1, a description of the data transmission in block form is shown. The transmission system contains a line 10 having an input port 13 and extending in a clockwise direction to output port 15. Connected in the line 10 are various interface units 11a, 11b, 11c, and connected to each respective interface unit is a peripheral 12a, 12b, and 12c, for transmitting or receiving data. The line 10 has a defined electrical length between input port 13 and output port 15. The electrical length will depend upon the number of interface units inserted in the line and the actual physical length of the line as well as operating temperature and other factors which may affect its electrical length.

A monitor 17 is provided in the line. Connected to the monitor is a controller 19. The controller initially places data onto the transmission system through the monitor and verifies the synchronization of the data stream as it passes through the monitor. A store is located in the monitor.

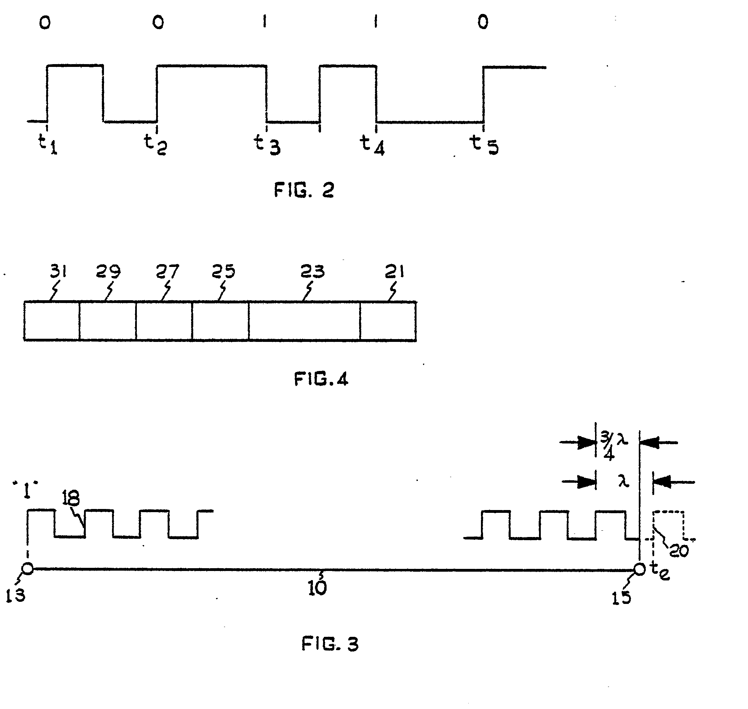

The data placed on the ring may be in any desired format. For the preferred embodiment, the data is in Manchester code shown in Fig. 2, where a rising edge at bit time is a "0" and a falling edge at bit time is a "1". The bit times are shown at t1, t2, t3, t4. The period or pulse width for a data bit may be $200 \times 10^{-9}$ seconds. Where the line propagation rate is $10^{-9}$ seconds per foot, then the length of line for one bit would be 200 feet. It can be seen therefore, that each $10^{-9}$ seconds a new bit will occupy that selected length in the line, taking the place of the data bit on that selected length in the immediately preceding data period.

If the physical length of the cable 10 in an installation is 1000 feet, then the line delay for that 1000 feet will be 5 bits.

$$1000 \text{ ft.} \times \frac{1}{200 \text{ ft. bit}} = 5 \text{ bits line delay}$$

where 1000 ft. is the line length

Additional delay may be built into the line by the interface units and for the sake of explaining the principles of the invention, each interface unit is assumed to have a 2-bit delay.

The total delay in the line then between line input port 13 and output port 15 would then be 11 bits. (6 bits for units 11a - 11c and 5 bits for 1000 ft. line length).

In the case of the preferred embodiment, the monitor loads data in the transmission system in the form of data packets. These packets carry the data loaded into particular data locations within the packet and send around the system to other peripherals where the information is extracted or retransmitted.

A typical data stream used with the preferred embodiment is as shown in Fig. 4. The data stream shown has a bit length of 328 bits comprised by a first packet section 21 containing an 8-bit presynch code, a second section contains a 64-bit synch code 23 and 4 packets of 64 bits each for conveying information from peripheral to peripheral. Each of the information packets, 25, 27, 29 and 31 contain a total of 64 bits. As is known in the art, the format of the data stream may be varied without departing from the principles of the invention.

As can be seen, at the propagation rate, a line length occupied by 328 bits is 65,600 feet, considerably more than the 1000 feet of line available to convey the data. The delay for the electrical line of 1000 feet and 3 interline units (2-bit delay per unit) is 11 data bits. As the data stream contains 328 bits, a means must be provided for accommodating the balance of the data stream or a data stream length of 317 data bits.

The system time length is the time for a particular data bit in a data stream to pass a point in a defined transmission system. In the case of a recirculating line having a length of 65,600 feet, and propagation rate of $10^{-9}$ sec/ft., the time length is 65.6 microseconds. Referring back to the system of Fig. 1, the line electrical length is shown by the distance X and represents the amount of data which may be accommodated by the line 10 and with Y representing the balance of the data in the bit stream accommodated by a store within the monitor 17.

In implementing the scheme schematically shown in Fig. 1, as each of the data bits as shown in Fig. 3 is taken off the line 10 at port 15 and placed in the store of monitor 17, a data bit is reinserted on the line at port 13 in synchronization with the removed data bit so that the line 10 is always filled with data. And as one bit, propagates off the line at output port 15 into the monitor 17, a new bit is placed on the line at input port 13. The result, according to the principles of the invention is that a precise number of bits whether an integer number or a non-interger number of bits X is continually on the line 10 and equal to the instantaneous electrical length of the line. The balance of the bits Y comprised by the data stream length is contained within a store within monitor 17 and which increases the number of bits stored in response to a contracting transmission line or decreases the number of bits stored in response to an expanding transmission line.

The system within monitor 17 and controller 17 for taking data bits off line 10 and for reinserting data bits on the line is shown in block form in Fig. 4. The data from line 10 is applied to a data state decoder 27 and through line 29, to data phase decoder 31. Data phase decoder 31 is sensitive to the phase of the data at input port 15 and produces a timing CLK' signal on line 33 which causes the data at input port 15 to be decoded and inserted into the store 40.

In the preferred embodiment, the store comprises the buffer 40, serial to parallel register 37 and parallel to serial register 45. As is known in the art, the exact store components may be varied consistent with the principles of the invention.

The frequency of the timing signal CLK' appearing on line 33 will be the same as the frequency of the system clock signal CLK. However, the phase between CLK and CLK' may vary depending upon data rate at port 15. If line 10 had an electrical length equal
to an integer number of bits, then the data phase and
frequency at output port 15 and at the input port 13 at
the state decoder 27 and at line input port 13 would be
the same. Where the electrical length of line 10 was
either longer or shorter than a full data bit, then the
frequency of the data signal on line 10, at the input
to the data state decoder 27 and at the input port 13
would be the same but the phase would be different.
The phase difference would be that existing between the
data phase appearing at outport 15 and the data phase
appearing at input port 13. This is shown in Fig. 3,
where Manchester encoded data is placed on the line
and data bit 18 shown by a rising edge at bit time 20
is "0". Bit 18 is shown as the last data bit on the
line at input port 13. The phase of the data bit at
the output port 15 is $3/4 \lambda$ where $3/4 \lambda$ is less than
the data period $\lambda$. The data phase at the input to the
monitor buffer is approximately equal to $3/4 \lambda$ such that
the leading edge 20 of a "0" bit is shown in phantom as
having entered the port at time $t_e$.

In the case of the preferred embodiment the clock
signal CLK' on line 33, Fig. 4, provides a timing signal
to transfer the data state on line 35 into the store comprising registers 37, 45 and Fifo buffer 40. Means 37
in the preferred embodiment is a serial to parallel
register which converts the data state from serial form
at port 15 to parallel form and routes that data in parallel form through line 39 to buffer 40.

Buffer 40 in the preferred embodiment is an
8-bit buffer. As is known in the art, line 39 would
be a set of 8 parallel lines for transferring the data
accordingly. The buffer 40 is a 128 x 8 bit buffer and
the data placed at the buffer input is transferred
through the buffer to the buffer output port. In a
typical 8 x 128 bit buffer, an 8-bit byte would require approximately 6 microseconds to transfer from
the buffer input port 41 to buffer output port 43,
assuming the buffer was completely empty.  Where the
buffer was filled, as for example where each of the
128 x 8 bit buffer stages were filled, and an 8-bit
byte is transferred out of the buffer at port 43, as
as 8-bit byte is transferred in at port 41, the data
transfer rate through the buffer is considerably
faster than the data rate on line 10.  The data from
the buffer 40 is transferred on line 44 to a parallel
to serial register 45 and then clocked onto the line
10 at line input port 13.

A comparator 47 is shown connected to serial to
parallel register 37 by line 49.  Each data byte on
line 39 and in register 37 also appears at comparator
47.  When the 8-bit presynch code appears in serial to
parallel register 37, it appears at comparator 47, generating an enabling signal to clock means 51 which produces a shift-in clock pulse CLK' on line 53 causing
data to be transferred from the serial to parallel register 37 into buffer store 40, through line 39.

Comparator 47 generates an indication of the time
when the line 10 between input port 13 and output port
15 is initially loaded with a data stream of length X.
In the preferred embodiment, when the comparator receives the 8 bit presynch code when it is loaded into
register 37, the indication is produced at $t_x$ + 8 bits,
where $t_x$ is the total time to initially load X data bits
on the line 10 between input port 13 and output port 15.
The Comparator 47 may be placed at other locations such
as at the input to register 37 without departing from
the principles of the invention with the timed relation
between the data and the presynch code adjusted accordingly.

Data placed in the 128 x 8 bit buffer 40, through
input port 41, is transmitted through the buffer to its output port 43 where it appears on line 44.

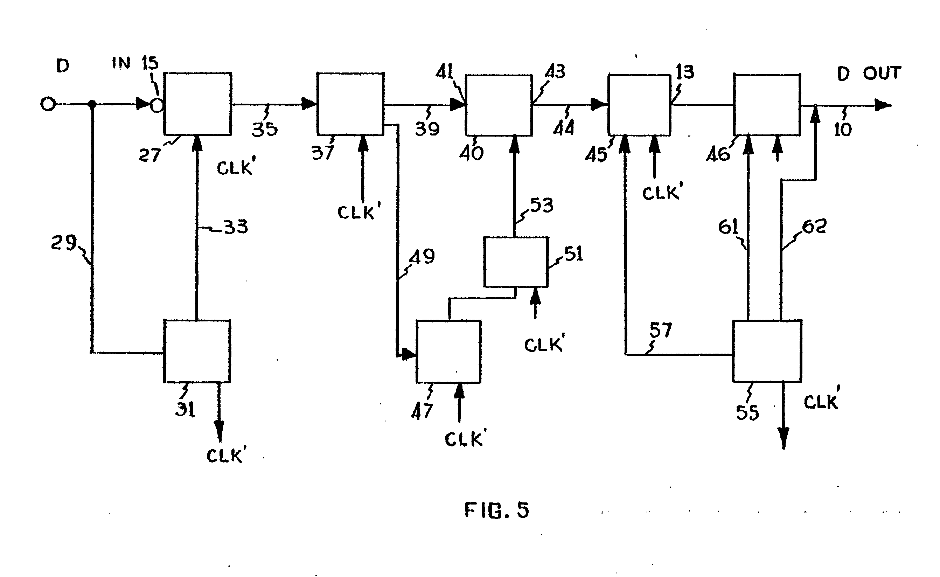

Additionally shown in Fig. 5 is a means 55 for initially loading data onto line 10 through line 62. The data loading means may be any suitable means as known in the art and is not shown in detail here as it does not form part of the invention.

As data is initially loaded onto the line at input port 13, it circulates through line 10, reenters the monitor at line output port 15 and then enters buffer 40 and appears at the output port 43 of buffer 40 and on line 44. For the purpose of explanation, it is assumed that a comparator 46 has no, or a negligible delay. Where the comparator 46 has a delay, it may be added to the total delay for line 10. The data then is held at buffer outport 43 until the monitor has placed the complete data stream on the line 10. As the data stream is of a predetermined length equal to T data bits, the monitor provides a count of the data bits placed on the line and an indication of T-time equal to the time necessary for the monitor to place T data bits on line 10. A suitable means such as a timing state decoder may be provided for this purpose as is well known in the art.

In the preferred embodiment, the data stream is shown as having a length of 328 bits. The monitor will then provide a timing state signal T when 328 bits have been placed on the line equal to the full length of the data stream. At this time, a portion of the T data bits equal to X data bits will appear on line 10 and between input port 13 of line 10 and output port 15 and the remaining portion of the data bits will be within the monitor store comprising registers 37, 45 and buffer 40.

In the preferred embodiment, an enable signal is placed on line 57 responsive to T time which may be one or two bit times before T time to account for de-

-13-

lays in the system leaving sufficient time to perform additional housekeeping functions. For the sake of explanation, assume that at T time corresponding to T data bits being loaded on line 10 an enabling signal is sent on line 57 to register 45 and at T+1 the first bit of data being the first bit in the presynch code appears at line input port 13. The data is then clocked back onto the line 10 through line input port 13 at the system clock rate CLK, produced by monitor 55.

At this time, or at a subsequent time, if the accumulated clock pulses used to transfer data from register 45 to the line 10 is subtracted from the accumulated clock pulses used to transfer data into register 37, a value would be obtained equal to the number of data bits Y stored within the buffer. The total number of data bits minus the number of data bits stored equal the number of data bits X on the line 10.

At T+1 and on when data appears at line input port 13, a further comparison is made by comparator 46 with the data clocked on to line 10 and the presynch code sent by monitor 55 on line 61. If the comparison indicates that the presynch code placed on line 61 does not match the code at the output port of line 10, and an error, then the correct presynch code is forced onto the line 10 by monitor 55 and the data transmission continues.

After a predetermined number of errors, as may be indicated by a multiple counter, the error is assumed to be in the synchronization rather than a transmission error and the data within the ring is cleared and reformated starting with the loading within the comparitor 47 of the presynch code and the transmission of data onto line 10 by monitor 55.

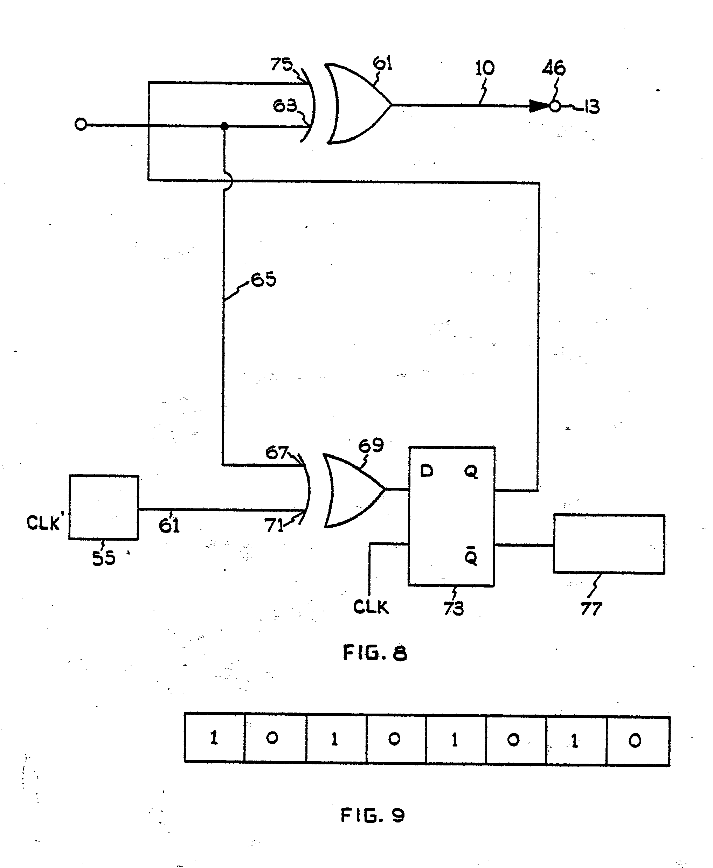

A detail description of comparator 46 for forcing the correct presynch code onto the data stream and counting the number of errors is shown with regard to Figs. 8 and 9.

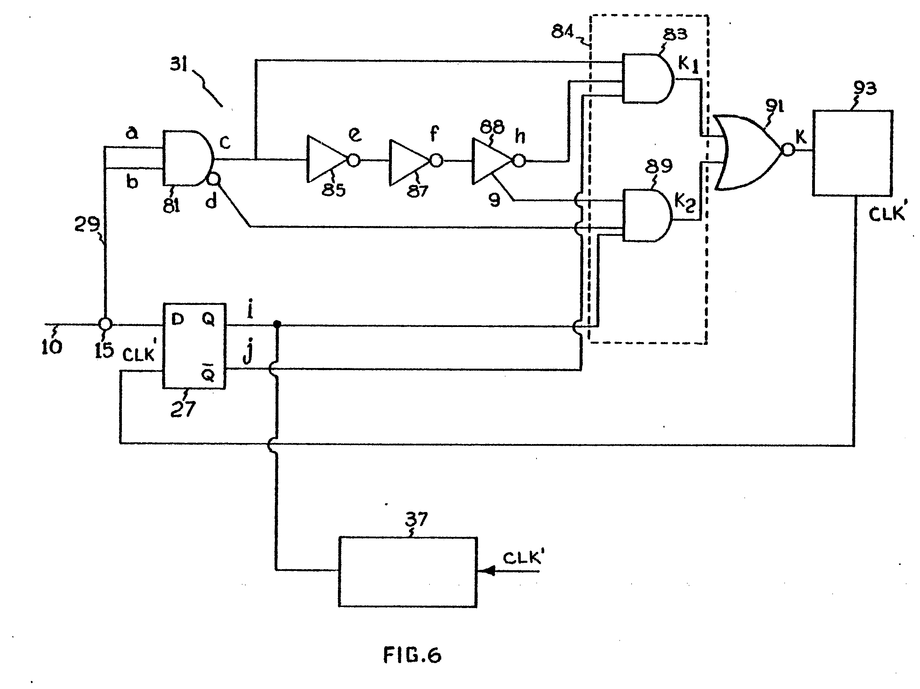

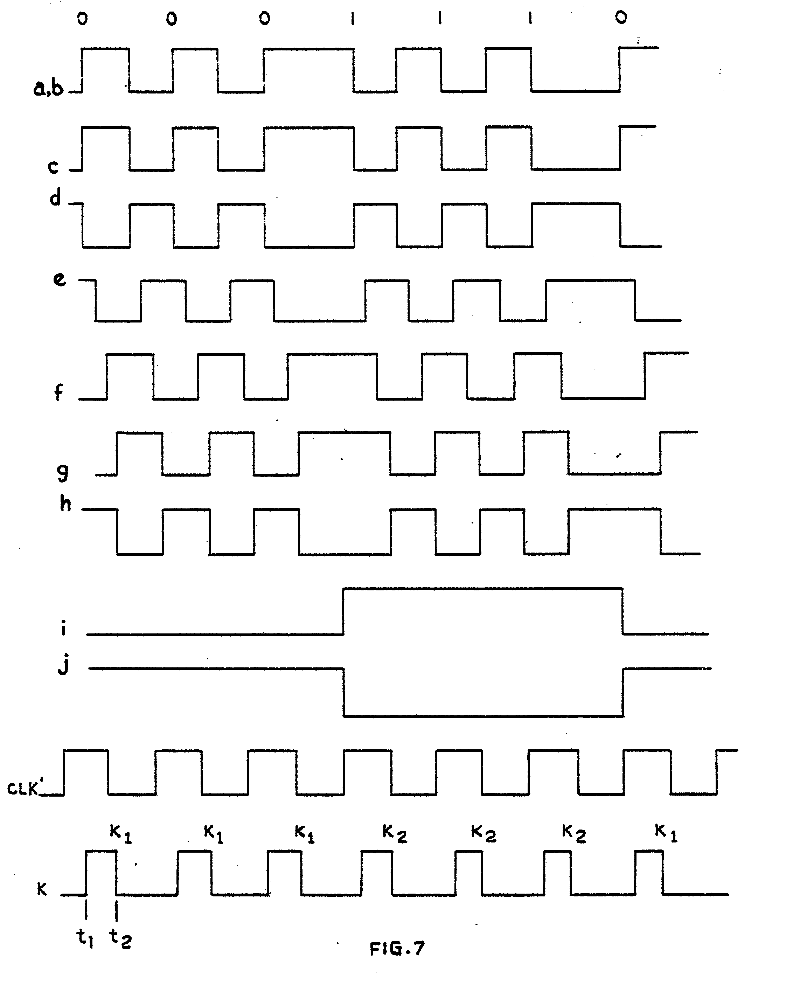

Referring now to Figs. 6 and 7, a detailed description of the means is shown for inserting data into the store responsive to the rate the data is received at the store. The data state decoder 27 and timing decoder 31 is shown generally in Fig. 5. The state decoder is shown in Fig. 6 as a D type flipflop 27 and the timing decoder is shown generally by numeral 31, with transmission line 10 shown being connected to the D terminal of state decoder 27 and to terminals A and B of and gate 81 of timing decoder 31, through line 29. The output port of transmission line 10 is connected to the timing decoder and to the state decoder input.

The data appearing at input port 15 and simultaneously at the D terminal of flipflop 27 and terminals a and b of and gate 87 is shown in Fig. 7a, b. The output of and gate 81 at terminal c is shown in Fig. 7c as a noninverted and nondelayed output while output d (Fig. 7d) is shown as an inverted nondelayed output. The output of terminal c is applied to and gate 83 of masked edge detector 84 and to the input of inverting delay deivce 85 where its output as shown in Fig. 7e, inverted with respect to data a, b, and delayed slightly in phase. The output at e (Fig. 7e) is then applied to inverting delay device 87 where its output at f, (Fig. 7f) appears noninverted and delayed with respect to the wave form at terminal c. The wave form at terminal f is applied to inverting delay device 88 where its delayed output at g, Fig. 7g, is applied noninverted to and gate 89 of masked edge detector 84 and where its output delayed and inverted at terminal h, Fig. h, is applied to gate 83 of masked edge detector 84. The inverted output wave form (Fig. 7d) at d terminal of gate 81 is also applied to and gate 89 of masked edge detector 84.

The output of and gate 83 and and gate 89 of masked edge detector 84 is applied to or gate 91 and to the phase lock loop 93. The output of phase lock loop 93 is a clock signal CLK' which is applied to the clock input of D type flipflop 27 and which has the same frequency as the system CLK and is at a predetermined phase relation to the phase of the data appearing at output port 15. The state of the data appearing on terminal D of flipflop 27 is clocked to the Q and $\overline{Q}$ terminal, and appears as wave form 7i and 7j.

The data at the line output port 15 and appearing on gate 81, terminals a, b, and flipflop 27 is shown initially as "0" data. That wave form appears in the same state at terminal c and inverted at terminal d. As the masked edge detector gate 83 is responsive to a high level from terminal c, a high from terminal h, and a high from terminal $\overline{Q}$ of flipflop 27, a pulse output $7k_1$ is produced by and gate 83 and at the input of phase lock loop 93. For "0" data the duration of pulse $7k_1$ is coextensive with the duration of the high level signals produced by the output of terminal c, (7c), the output of terminal h (7h) and the $\overline{Q}$ output of the flipflop 27 (7j). That duration extends from $t_1$ to $t_2$. The pulse input to the phase lock loop 93 is then used to produce a clock signal show. as CLK' which is applied to the D type flipflop 27 and which clocks the data state on terminal D to terminal Q and to terminal $\overline{Q}$. In a similar manner, a pulse $7k_2$ is produced by gate 89 when a high is produced at terminals g, d and j. The direction of pulse $7k_2$ is also from $t_1$ to $t_2$.

It should be noted that the precise phase relation between the clock signal CLK' and the pulse output 7k from the masked edge detector 84 is not critical. What is important is that the clock signal CLK' be applied to the flipflop 27 in phase relation to the data on output port 15 so the data may be transferred to the register 37 at a data rate given by the rate the data appears on output port 15 and responsive to a predetermined data phase appearing at output port 15. In the preferred embodiment, the data is transferred into the serial to parallel register 37 of the store by CLK' approximately a quarter of a period before bit time.

As stated previously, data is inserted into the store responsive to the rate the data is received at line output port 15. That data rate will be the same frequency as that of the data inserted into the line and extracted from the store and reinserted on the line. The data rate is a measure of the occurrence of a predetermined data phase at line output port 15 and may differ from the phase of the data inserted on the line at input port 13. As the data rate may be defined as a predetermined phase of the data occurring at a point in the line, any change in the electrical length of the line will alter the phase of the data received at that point such as at the store. The means for inserting data into the store, comprising the data state decoder 27 and timing decoder 31 will then produce a clock signal CLK' responsive to the data rate appearing at the line output port 15, and at the store input, and insert the data into the store responsive to the data rate responsive clock signal CLK'.

Referring now to Figs. 8 and 9, the means for verifying the synchronization of the data shown generally by numeral 46 in Fig. 5 is shown in greater detail.

The presynch code as shown in Fig. 9 may be a series of alternate "1"s or "0"s, or any other suitable arrangement of data bits occupying selected bit positions such as 0 through 7 in the data stream.

As explained above, at T time, the full length of the data stream has been placed on the line by monitor 55, and then the data is clocked out of the store's parallel to serial shift register 45. As stated previously, the time length of the system is the time for the data stream to pass a point in the transmission system. As the data stream is synchronized with the system clock CLK, it is possible to predict the location of selected data bit positions at a selected point in the transmission system.

In the preferred embodiment, that point is the comparator shown as 46 in Fig. 5 and shown in detail in Fig. 8.

The presynch code portion shown in Fig. 9 and occupying data bit positions 0 through 7 of the data stream is used to verify the synchronization of data stream and that selected bits appear at a selected point in the transmission system at a predetermined time.

Where the first data bit for the 0 bit position of the presynch code received at line input port 13 is a "0" at time T + 1, that data bit value will be impressed upon terminal 67 of exclusive or gate 69. Where the correct data bit value for that presynch code bit position is a "0" then the monitor 55 will produce a "0" on terminal 71 for the data bit position. Where a "0" appears on terminal 67 and a "0" on terminal 71, then the output of exclusive or gate 69 would be a "0" which would be translated to the Q terminal and to terminal 75 serving as an input to exclusive or gate 61.

As a "0" appears on terminal 75 and a "0" appears on terminal 63, the output at exclusive or gate 61 is a "0" consistent with the synchronized presynch code 0 bit postion.

Where a "1" appears on terminal 63 but the correct presynch data value is a "0" and a "0" bit appears on terminal 71, as produced by monitor 55, then the output of exclusive or gate 69 will be a "1", which will be translated to the Q output of D flipflop 73 and to the input terminal 75 of exclusive or gate 61 causing the data state on terminal 63 to be flipped
to produce a "0" reflecting the correct data bit value
as shown by the presynch code bit value simultaneously
produced by monitor 55. As the data value of the Q
terminal changes, so will the data value of the $\overline{Q}$
terminal causing an increment in the count register
in register 77.

At time T + 2 the second bit of the data stream is
clocked out of register 45 of the store and appears at
terminal 63 of exclusive or gate 61. The data appearing
on terminal 63 is applied through line 65 to terminal 67
of exclusive or gate 69. At time T + 2, monitor 55 applies a data bit on line 71 of exclusive or gate 69 corresponding to the value of the second bit position of
the presynch code shown in Fig. 9.

If the presynch code data bit produced by monitor
55 on terminal 71 is the same as presynch code data bit
on terminal 67, i.e., "1" , then the output of exclusive
or gate 69 will be a "0" or low. That output is received by the D terminal of the D type flipflop 73 and
clocked to the Q terminal where it appears as a "0" bit
on terminal 75 of exclusive or gate 61. As the "0" bit
on terminal 75 does not cause a change in the output of
exclusive or gate 61, the "1" data bit appearing in the
second bit position of the data stream of terminal 63 is
then translated at the output of exclusive or gate 61
as a "1" after comparison with the same value data bit
produced by monitor 55 on terminal 71 of exclusive or
gate 69.

Where the data bit produced by monitor 55 is a "1"
indicative of an error when compared with a "0" on
terminal 63, the output of exclusive or gate 69 will be
"1" or high which will be translated as a "1" at the
Q output of flipflop 73 and "1" input to terminal 75 of
exclusive or gate 61. The "1" on terminal 75 will cause
the or gate 61 to flip the data bit on its other terminal 63, forcing a "!" bit on the output of or gate
61 and correcting the error appearing in the 1 bit
position of the presynch code.

As the data state of the Q output of the D type
flipflop changes due to an error, the data state at
the $\overline{Q}$ output of the D type flipflop will similarly
change producing a pulse to counter 77 and generating
a presynch error count in register 77.

The synchronizing means forces a "1" bit to be
combined with the presynch code on terminal 63 whenever an error appears, flipping the data bit value
transmitted to line 10 to its proper value.

The counter may be used to generate an enable
signal responsive to a predetermined number of errors
such as 8. After said number of errors, the line may
be cleared of all data and reloaded as described
above. The predetermined error number may be sufficiently large to establish a time synchronization
error.

The monitor and controller and their interrelated
functions such as initially generating and loading data
on to the line 10, the removal of data from the line,
generation of timing state signals and other functions
generally associated with a data ring and which do not
form part of the invention are not shown in a functional
block diagram. The monitor 17 and controll are shown
as separate units for the purpose of explanation but
may be combined into a single unit as in the case of
the preferred embodiment.

The principles of this invention should not be
thought of as limited by the foregoing description of
the preferred embodiment.

CLAIMS

1.  An apparatus for controlling the length of a data stream on a line within a transmission system comprising,

a) means for loading data onto said line,

b) store means connected to said line for receiving and storing said data,

c) means connected to said store means and said loading means for reinserting said data from said store on said line responsive to said loading means placing the full length of the data stream on the line.

2.  The apparatus of claim 1 where said reinserting means reinserts said data responsive to the last data bit of said data stream being placed on said line and said reinserted data follows said last data bit.

3.  The apparatus of claim 1 including means for inserting data in said store at the rate data is received at said store.

4.  An apparatus for controlling the length of a data stream within a transmission line and having a data clock rate comprising

a) store means having an input port connected to receive data from the line output port and an output port connected to reinsert data into the line input port,

b) means for inserting data from the line into the store at the rate data is received at the said store input port,

c) means responsive to the data clock for reinserting data from the store output port to the line.

5.  The apparatus of claim 4 where said means for inserting data into the store includes means responsive to the data phase for sensing the received data rate at the store input port.

6.  The apparatus of claim 4 where said transmission line has a predetermined electrical length and said store contains an amount of data substantially equal to the data stream length minus the electrical length of the transmission line and where said means for inserting data from the line into the store, inserts additional data into the store in response to transmission line diminishing in electrical length and said means for inserting data into the store decreases the amount of data in the store in response to an increase in the transmission line electrical length.

7. An apparatus for synchronizing a data stream circulating within a data ring, said data stream having a predetermined length comprising a clock, means for loading data onto the ring in synchronism with said clock,

and verifying means located in the ring at a selected point to verify the synchronization of the data at that said point at a preselected time.

8. The apparatus of claim 7 where said verifying means includes means for generating a data word in synchronism with the passage of a plurality of selected bit positions in said data stream and means for comparing said data word with the data bits in said selected bit positions.

9. A method for controlling the length of a data stream on a line within a transmission system comprising the steps of

a) loading data onto said line,

b) receiving and storing said data,

c) reinserting said data from said store on said line responsive to the full length of the data stream being placed on the line.

10. A method for controlling the length of a data stream within a transmission line and having data clock comprising the steps of

a) sensing the rate data is received at a store and inserting data from the line into the store at the rate data is received at the said store input port,

b) reinserting data from the store output port to the line responsive to the data clock.

FIG. 1

2 /.6

0065377

FIG. 2

FIG.4

FIG. 3

FIG. 5

0065377

FIG.6

FIG.7

6 / 6.

0065377

FIG. 8

FIG. 9

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | WO-A-8 100 498  (WESTERN ELECTRIC)<br>* Pages 8-11 * | 1-10 | H 04 L   11/16<br>H 04 L    7/00 |
| X | US-A-3 681 759 (JOHN DAN HILL)<br>* Column 11, line 31 - column 14, line 36 * | 1-10 | |
| X | IEE PROCEEDINGS-E: COMPUTERS AND DIGITAL TECHNIQUES, vol. 128, no. 2, Part E, March 1981, Old Woking, Surrey, G.B.<br>I.M.   LESLIE:   "Master   clock repeater  for  the cambridge dig-ital  communication ring" * Pages 64-66 * | 1-10 | |

TECHNICAL FIELDS
SEARCHED (Int. Cl. ³)

H 04 L   11/16
H 04 L    7/00
H 04 J    3/06

The present search report has been drawn up for all claims

| Place of search | Date of completion of the search | Examiner |
|---|---|---|
| THE HAGUE | 17-08-1982 | LAMADIE G.Y.P. |